# EUROPÄISCHE PATENTANMELDUNG

(11) **EP 4 462 627 A1**
(43) Veröffentlichungstag der Anmeldung: **13.11.2024**
(21) Anmeldenummer: 23172855.1
(22) Anmeldetag: 11.05.2023
(51) Int. Cl.: H02J 3/18, H02J 3/32, H02J 9/06, H02P 6/24

(54) **PHASENSCHIEBERANLAGE UND VERFAHREN ZUM BETRIEB EINER PHASENSCHIEBERANLAGE**

(71) Anmelder: Kraftanlagen Energies & Services SE, 80339 München (DE)
(72) Erfinder: Sahin, Ahmet, 83734 Hausham (DE); Steen, Torsten, 81735 München (DE)
(74) Vertreter: advotec.

(57) **Zusammenfassung**

Die Erfindung betrifft eine Phasenschieberanlage (10) und ein Verfahren zum Betrieb einer Phasenschieberanlage, umfassend einen rotierenden Phasenschieber (11), welcher eine, insbesondere mit einer Schwungmasse mechanisch gekoppelte, Synchronmaschine (12) umfasst, und eine Mehrzahl von elektrischen Hilfsverbrauchern (52), wobei die Phasenschieberanlage bei einem Netzausfall zu einem kontrollierten Abfahren des rotierenden Phasenschiebers von einem Normalbetrieb der Phasenschieberanlage in einen Notstrombetrieb der Phasenschieberanlage umschaltbar ist, in welchem eine Rotationsenergie des rotierenden Phasenschiebers mittels der in dem Notstrombetrieb in einem Generatorbetrieb betriebenen Synchronmaschine in eine elektrische Energie umwandelbar ist, welche zumindest zeitweise zur Versorgung zumindest eines, vorzugsweise notstromberechtigten, Teils der Mehrzahl von, insbesondere als Niederspannungs-Hilfsverbraucher ausgebildeten, Hilfsverbrauchern während des Abfahrens des rotierenden Phasenschiebers vorgesehen ist.

## Beschreibung

Die Erfindung betrifft eine Phasenschieberanlage und ein Verfahren zum Betrieb einer Phasenschieberanlage, wobei die Phasenschieberanlage einen rotierenden Phasenschieber, welcher eine, insbesondere mit einer Schwungmasse mechanisch gekoppelte, Synchronmaschine umfasst, und eine Mehrzahl von elektrischen Hilfsverbrauchern umfasst.

Eine derartige Phasenschieberanlage mit einem rotierenden Phasenschieber ist aus dem Stand der Technik bekannt und wird regelmäßig zur Bereitstellung von einer Blindleistung für ein Stromnetz bzw. Netz eingesetzt. Weiter kann eine derartige Phasenschieberanlage durch eine Möglichkeit, eine Rotationsenergie des rotierenden Phasenschiebers aus dem rotierenden Phasenschieber zu entnehmen und in Form einer Wirkleistung für das Netz bereitzustellen, einen Beitrag zur Netzfrequenz stabilisierenden Momentanreserve leisten. Zudem kann eine derartige Phasenschieberanlage eine Kurzschlussleistung bereitstellen.

Der rotierende Phasenschieber seinerseits umfasst eine Synchronmaschine und optional eine mit der Synchronmaschine bzw. einer Welle der Synchronmaschine mechanisch gekoppelte Schwungmasse. Die Synchronmaschine befindet sich in einem Normalbetrieb der Phasenschieberanlage hauptsächlich in einem Leerlaufbetrieb bzw. Phasenschieberbetrieb der Synchronmaschine, welcher auch als übererregter bzw. untererregter Blindlastbetrieb bezeichnet wird, um dem Netz nahezu ausschließlich kapazitive oder induktive Blindleistung zu liefern. Der Phasenschieberbetrieb kann bei einer Nichtbeeinflussung eines Drehmoments der Welle durch eine Beeinflussung einer mittels eines Erregersystems der Phasenschieberanlage ausgebildeten, die Synchronmaschine erregenden Erregerleistung aus dem Leerlaufbetrieb erhalten werden. Interne mechanische Energieverluste der Phasenschieberanlage werden in dem Normalbetrieb durch einen Motorbetrieb der Synchronmaschine, welcher auch bei einem Anfahrbetrieb der Phasenschieberanlage verwendet wird, gedeckt. Je nach gewünschter Betriebsart kann die ausgebildete Erregerleistung durch Regelung eines in einer Erregerwicklung des Erregersystems ausgebildeten Erregerstroms angepasst werden. In dem Normalbetrieb, in dem die Phasenschieberanlage mit dem Netz elektrisch verbunden ist, sind eine Klemmenspannung der Synchronmaschine und eine Drehzahl der Synchronmaschine bzw. des rotierenden Phasenschiebers durch das Netz vorgegeben. Beispielsweise kann die Drehzahl dann 50 Hz betragen.

Die Phasenschieberanlage umfasst in der Regel elektrotechnische Komponenten, wie Transformatoren, Leistungselektronik und/oder Schaltanlagen bzw. Schalteinrichtungen. Da in einem Betrieb der Phasenschieberanlage typischerweise große Mengen an Abwärme entstehen, muss zudem eine Abführung der Abwärme sichergestellt werden. Weiter muss für eine Schmierung von Lagern des rotierenden Phasenschiebers gesorgt werden. Dies macht einen Einsatz einer Mehrzahl von verfahrenstechnischen Komponenten der Phasenschieberanlage, wie beispielsweise ein Schmierölsystem, ein Kühlwassersystem und ein Kühlluftsystem bzw. Lüftungssystem, erforderlich. Auch umfasst die Phasenschieberanlage regelmäßig ein Leittechniksystem und weitere Komponenten, wie beispielsweise eine Notfallbeleuchtung. Derartige, insbesondere verfahrenstechnische, Komponenten werden vorliegend als elektrische Hilfsverbraucher der Phasenschieberanlage bezeichnet, bei welchen es sich um Hilfskomponenten, Hilfsaggregate, Hilfsmaschinen oder Hilfssysteme der Phasenschieberanlage handelt. In dem Normalbetrieb können die Hilfsverbraucher die Phasenschieberanlage bzw. den rotierenden Phasenschieber bedarfsgerecht versorgen.

Soll der rotierende Phasenschieber abgefahren werden, so kann die Erregung der Synchronmaschine abgestellt werden. Daraufhin können die Anlagenteile wie das Schmierölsystem, das Kühlwassersystem, das Kühlluftsystem und das Leittechniksystem, beispielsweise über einen Eigenbedarfstransformator der Phasenschieberanlage, solange mit elektrischer Energie gespeist werden, bis der rotierende Phasenschieber vollständig abgefahren, das heißt zum Stillstand gekommen, ist. Über Scheibenbremsen, elektrische oder hydrodynamische Wellenbremsen sowie elektrische Bremsung durch einen statischen Umrichter kann ein Läuferstrang des rotierenden Phasenschiebers gesichert und abgefahren werden.

Im Fall eines, insbesondere für größere Zeiträume auftretenden, großflächigen Stromausfalls, welcher "Blackout" bzw. "Schwarzfall" genannt und nachfolgend auch als "Netzausfall" bezeichnet wird, kann die Phasenschieberanlage durch eine fehlende Stromversorgung weder weiterbetrieben noch in einen sicheren Zustand gefahren werden. Ein solcher Netzausfall kann beispielsweise durch eine starke Überlastung des Netzes infolge einer Verkettung von ungünstigen Versorgungssituationen oder Schäden an einer Infrastruktur ausgelöst werden. Es ist daher ein geeigneter Notfallplan für eine Sicherheit der Phasenschieberanlage in einem solchen Fall notwendig. Die Phasenschieberanlage stellt aufgrund ihrer Fähigkeit zur Bereitstellung von Systemdienstleistungen einen wichtigen Faktor für eine funktionierende Strominfrastruktur dar. Zudem birgt sie durch eine große rotierende Masse des rotierenden Phasenschiebers und Wärmelasten eine Gefahr von Anlagenschäden bei einem unkontrollierten Abfahren des rotierenden Phasenschiebers. Dies gefährdet im Schadensfall neben der Anlagensicherheit auch einen Kapitaleinsatz sowie das Stromnetz an sich, da der Netzbetreiber bei einer Wiederkehr des Netzes nicht mehr auf die Systemdienstleistungen der Phasenschieberanlage zurückgreifen kann. Ein kontrolliertes Abfahren des rotierenden Phasenschiebers muss also wirtschaftlich und technisch sichergestellt werden.

Für das kontrollierte Abfahren des rotierenden Phasenschiebers wird insbesondere ein Teil der verfahrenstechnischen Komponenten der Phasenschieberanlage weiterhin benötigt. Die großen Hauptproblematiken der Phasenschieberanlage stellen die sichere Energieversorgung von dem Leittechniksystem, Kühlluftsystem, Kühlwassersystem und Schmierölsystem dar. Diese dürfen unter keinen Umständen für eine längere Zeit ausfallen. Ein Ausfall des Schmierölsystems hätte gravierende Folgen für die Lager der Welle der Synchronmaschine und gegebenenfalls der Schwungmasse bzw. eines Schwungrades. Da die Lager, wenn auch geringe, Reibungswiderstände aufweisen, muss dort verrichtete, dissipative Arbeit in Form von Wärme abgeführt werden, um maximal zulässige Temperaturen in den Lagern einzuhalten. Diese sind durch eingesetzte Werkstoffe begrenzt und können, werden diese Materialgrenzen überschritten, zum Ausfall der Lager führen. Hierdurch würde der gesamte Läuferstrang einen irreparablen Schaden nehmen. Eine in einem Schmierölkreislauf des Schmierölsystems zirkulierendes Schmieröl nimmt also die Wärme auf und gibt sie an ein in einem Kühlwasserkreislauf des Kühlwassersystems zirkulierendes Kühlwasser ab. Der Kühlwasserkreislauf ist damit von ebenso entscheidender Bedeutung. Dieser nimmt insbesondere die Wärme aus den Lagern auf. Jedoch müssen auch ein Rotor der Synchronmaschine und gegebenenfalls die Schwungmasse an sich durch Luft gekühlt werden. Durch Luftreibung der rotierenden Masse entsteht nämlich ein Wärmeeintrag in eine Luftumgebung des Schwungrades sowie einen Luftspalt des Rotors. Diese Wärme muss durch eine forcierte Luftströmung abgeführt werden. Der Rotor emittiert zusätzlich zur Wärme aus der Luftreibung Abwärmen aus elektrischen Verlusten. Diese treten auch in einem Stator der Synchronmaschine auf.

Mit dem Wissen um die Wichtigkeit einer leistungsstarken Notstromversorgung, welche auf keinen Fall zu lange Umschaltzeiten im Interesse der Vermeidung hoher Wärmeeinträge haben darf, können für konventionelle Notstromerzeuger folgende Problematiken identifiziert werden. Zwar können Batterieanlagen unterbrechungsfrei Notstrom zur Verfügung stellen, jedoch müssen große Leistungen über lange Zeiträume bereitgestellt werden. Dies würde, trotz einer Ausbildung einer Gleichstromnotstromschiene und einer stark optimierten Leistungsabnahme der Komponenten mit einem zusätzlichen Einsatz von beispielsweise DC-Pumpen, welche eine hohe Batteriekapazität benötigen, in einer hohen Batteriekapazität münden. Zudem müssen große Räumlichkeiten für eine Lagerung der Batterien vorgesehen werden. Durch die Lagerung der Batterien entsteht des Weiteren ein zusätzlicher Wartungsaufwand. Diese Lösung ist daher als unwirtschaftlich anzusehen. Weiter können Dieselaggregate zwar in der gewünschten Leistungsklasse kostengünstiger und platzsparender beschafft werden, müssen allerdings noch weitaus intensiver gewartet werden. Zudem entsteht durch ihre Natur die große Gefahr, dass die Dieselaggregate bei einem Netzausfall keine absolute Startsicherheit aufgrund von Fehlern, beispielsweise bei einer Brennstoffzufuhr oder eines Startermotors, aufweisen könnten. Dies ist als derart kritisch anzusehen, dass nach einer Möglichkeit zu suchen ist, eine möglichst sichere Notstromversorgung mit geeigneter Langzeitkapazität und Leistungsstärke zu garantieren. Besonders wichtig ist es dabei, die Rotationsenergie der großen rotierenden Masse des rotierenden Phasenschiebers sicher aus dem rotierenden Phasenschieber abzuführen, und eine Länge einer Abfahrzeit des rotierenden Phasenschiebers zu minimieren, wobei eine Sicherheit der Phasenschieberanlage im Vordergrund steht.

Der vorliegenden Erfindung liegt daher die Aufgabe zugrunde, eine Phasenschieberanlage mit einem rotierenden Phasenschieber und ein Verfahren zum Betrieb einer Phasenschieberanlage mit einem rotierenden Phasenschieber vorzuschlagen, welche bzw. welches bei einem Netzausfall ein kontrolliertes Abfahren des rotierenden Phasenschiebers mit einfachen Mitteln ermöglicht.

Diese Aufgabe wird durch eine Phasenschieberanlage mit den Merkmalen des Anspruchs 1 und ein Verfahren zum Betrieb einer Phasenschieberanlage mit den Merkmalen des Anspruchs 10 gelöst.

Die erfindungsgemäße Phasenschieberanlage umfasst einen rotierenden Phasenschieber, welcher eine, insbesondere mit einer Schwungmasse mechanisch gekoppelte, Synchronmaschine umfasst, und eine Mehrzahl von elektrischen Hilfsverbrauchern, wobei die Phasenschieberanlage bei einem Netzausfall zu einem kontrollierten Abfahren des rotierenden Phasenschiebers von einem Normalbetrieb der Phasenschieberanlage in einen Notstrombetrieb der Phasenschieberanlage umschaltbar ist, in welchem eine Rotationsenergie des rotierenden Phasenschiebers mittels der in dem Notstrombetrieb in einem Generatorbetrieb betriebenen Synchronmaschine in eine elektrische Energie umwandelbar ist, welche zumindest zeitweise zur Versorgung zumindest eines, vorzugsweise notstromberechtigten, Teils der Mehrzahl von, insbesondere als Niederspannungs-Hilfsverbraucher ausgebildeten, Hilfsverbrauchern während des Abfahrens des rotierenden Phasenschiebers vorgesehen ist.

Demnach liegt der Erfindung die Idee zugrunde, die Phasenschieberanlage derart einzurichten, dass die Phasenschieberanlage bei einem Netzausfall von einem Normalbetrieb der Phasenschieberanlage, in welchem die Phasenschieberanlage mit dem Netz elektrisch verbunden und der rotierende Phasenschieber zur Bereitstellung von Blindleistung für das Netz in einem Phasenschieberbetrieb betrieben werden kann, in einen Notstrombetrieb der Phasenschieberanlage umschaltbar ist, in welchem die Rotationsenergie des rotierenden Phasenschiebers, welche sich aus einer Rotationsenergie der Welle, gegebenenfalls einer Rotationsenergie einer Schwungmasse des rotierenden Phasenschiebers und einer Rotationsenergie eines Rotors der Synchronmaschine, welcher an der Welle angeordnet sein kann, zusammensetzen kann, mittels der in dem Notstrombetrieb in einem Generatorbetrieb betriebenen Synchronmaschine, in welchen die Synchronmaschine bei dem Umschalten der Phasenschieberanlage in den Notstrombetrieb von dem Phasenschieberbetrieb wechseln kann, in eine elektrische Energie umwandelbar ist, welche zumindest zeitweise während des Abfahrens des rotierenden Phasenschiebers zumindest eines Teils der Mehrzahl von Hilfsverbrauchern verwendbar ist. Mit anderen Worten ist die Phasenschieberanlage bei dem Netzausfall in einen Inselbetrieb umschaltbar, in welchem die aus dem rotierenden Phasenschieber abgeführte Rotationsenergie zumindest zeitweise während des Abfahrens des rotierenden Phasenschiebers in Form von der elektrischen Energie bzw. Wirkleistung zu einem Weiterbetrieb zumindest des Teils der Mehrzahl von Hilfsverbrauchern in die Phasenschieberanlage zurückspeisbar ist. Die Rotationsenergie kann somit unter Verkürzung einer Abfahrzeit des rotierenden Phasenschiebers kontrolliert aus dem rotierenden Phasenschieber abgeführt werden. Gleichzeitig kann die aus dem rotierenden Phasenschieber abgeführte Rotationsenergie zum Weiterbetrieb zumindest des Teils der Mehrzahl von Hilfsverbrauchern, insbesondere eines notstromberechtigten Teils der Mehrzahl von Hilfsverbrauchern, das heißt eines sicherheitsrelevanten Teils der Mehrzahl von Hilfsverbrauchern, welcher zum kontrollierten, das heißt insbesondere beschädigungsfreien, Abfahren des rotierenden Phasenschiebers erforderlich ist, verwendet werden, so dass auf einen Einsatz von großen Batterieanlagen und schweren Dieselaggregaten verzichtet werden kann. Im Ergebnis ermöglicht die erfindungsgemäße Phasenschieberanlage somit bei einem Netzausfall ein kontrolliertes Abfahren des rotierenden Phasenschiebers mit einfachen Mitteln.

Der rotierende Phasenschieber kann die Schwungmasse umfassen. Die Synchronmaschine bzw. eine Welle der Synchronmaschine kann dann mit der Schwungmasse mechanisch gekoppelt sein.

Die Mehrzahl von Hilfsverbrauchern kann als Niederspannungs-Hilfsverbraucher und als Mittelspannungs-Hilfsverbraucher ausgebildete Hilfsverbraucher umfassen. Insbesondere können alle Hilfsverbraucher der Mehrzahl von Hilfsverbrauchern als Niederspannungs-Hilfsverbraucher ausgebildet sein. Die Phasenschieberanlage kann einen Niederspannungstransformator umfassen, über welchen die als Niederspannungs-Hilfsverbraucher ausgebildeten Hilfsverbraucher in dem Normalbetrieb spannungsgerecht energieversorgt werden können. In dem Notstrombetrieb kann der Niederspannungstransformator dann dazu verwendet werden, um eine von der Synchronmaschine bereitgestellte Spannung bzw. eine Klemmenspannung der Synchronmaschine, welche in einer Mittelspannungsebene liegen kann, zur spannungsgerechten Versorgung der als Niederspannungs-Hilfsverbraucher ausgebildeten Hilfsverbraucher auf eine Niederspannungsebene abzusenken. Weiter kann die Mehrzahl von Hilfsverbrauchern Gleichspannungs-Hilfsverbraucher und Wechselspannungs-Hilfsverbraucher umfassen, wobei die Gleichspannungs-Hilfsverbraucher über einen Gleichrichter spannungsgerecht versorgt werden können. Die Phasenschieberanlage kann dann eine Wechselspannungs-Schaltanlage und/oder eine Gleichspannungs-Schaltanlage umfassen.

In einer bevorzugten Ausführungsform der Phasenschieberanlage kann die Phasenschieberanlage eine Erkennungseinrichtung zur Erkennung des Netzausfalls umfassen. Die Erkennungseinrichtung kann beispielsweise eine Netzfrequenz überwachen und anhand eines Unterschreitens der Netzfrequenz eines Schwellenwertes erkennen, ob ein Netzausfall eingetreten ist. Nach einer Erkennung des Netzausfalls kann dann das Umschalten der Phasenschieberanlage aus dem Normalbetrieb in den Notstrombetrieb erfolgen.

Die Phasenschieberanlage kann einen Erdungstransformator zum Schutz der Synchronmaschine umfassen.

Die Phasenschieberanlage kann einen Maschinentransformator zur Kopplung der Phasenschieberanlage, insbesondere über eine Hochspannungsschaltanlage, welche auch Bestandteil der Phasenschieberanlage sein kann, an ein Netz umfassen. Der Maschinentransformator kann in dem Normalbetrieb dazu verwendet werden, die Klemmenspannung der Synchronmaschine, welche in der Mittelspannungsebene liegen kann, auf eine Netzspannung, welche in einer Hochspannungsebene oder einer Höchstspannungsebene liegen kann, anzuheben und durch seine Kopplung an das Netz einen Blindleistungsaustausch zwischen der Synchronmaschine und dem Netz zu ermöglichen. Zudem kann der Maschinentransformator in dem Normalbetrieb zur Einspeisung von Wirkleistung aus dem Netz in die Phasenschieberanlage zur Deckung eines Eigenbedarfs der Phasenschieberanlage bzw. der Mehrzahl von Hilfsverbrauchern an elektrischer Energie verwendet werden. Die Netzspannung kann jedoch auch in einer Mittelspannungsebene liegen. Auf den Maschinentransformator kann dann gegebenenfalls verzichtet werden. Bei dem Netzausfall kann eine elektrische Verbindung der Phasenschieberanlage mit dem Netz unterbrochen werden, insbesondere, um eine Einspeisung der mittels der in dem Generatorbetrieb betriebenen Synchronmaschine erzeugten Wirkleistung in das Netz zu verhindern.

Weiter kann die Phasenschieberanlage eine Mittelspannungsschaltanlage umfassen, welche zur Verteilung von elektrischer Energie zu verschiedenen mit der Mittelspannungsschaltanlage elektrisch verbundenen Abnehmern dienen kann. Die Mittelspannungsschaltanlage kann eine Mittelspannungsschiene umfassen, mit welcher die Abnehmer elektrisch verbunden sein können. Die Abnehmer werden im Folgenden näher beschrieben.

Unter dem Begriff "elektrisch verbunden" soll vorliegend verstanden werden, dass entsprechende elektrisch verbundene Komponenten zumindest über eine elektrische Leitung und/oder eine Stromschiene elektrisch verbunden sind, derart, dass zwischen den entsprechenden Komponenten prinzipiell elektrische Energie bzw. ein elektrischer Strom in beliebiger Richtung fließen kann. In die elektrische Leitung bzw. Stromschiene kann eine Schalteinrichtung integriert sein, so dass die entsprechenden Komponenten dann insbesondere auch über die Schalteinrichtung elektrisch verbunden sein können. Die entsprechenden Komponenten sind im Sinne dieses Begriffes unabhängig davon elektrisch verbunden, ob die Schalteinrichtung zu einem gegebenen Zeitpunkt nun derart geschaltet sein sollte, dass zwischen den entsprechenden Komponenten elektrische Energie bzw. ein elektrischer Strom fließen kann, oder nicht, bzw. ob ein entsprechender Schalter der Schalteinrichtung gerade geöffnet oder geschlossen sein sollte.

Ferner kann die Phasenschieberanlage einen Eigenbedarfstransformator umfassen, welcher insbesondere zur Energieversorgung der Mehrzahl von Hilfsverbrauchern in dem Normalbetrieb dienen kann. Der Eigenbedarfstransformator kann dann elektrisch mit der Mittelspannungsschaltanlage verbunden sein, so dass in dem Normalbetrieb aus dem Netz entnommene Wirkleistung über den Eigenbedarfstransformator in die Mittelspannungsschaltanlage eingespeist werden kann, um diese sodann den Abnehmern der Mittelspannung zur Verfügung zu stellen. Die Synchronmaschine kann über eine zweite Schalteinrichtung der Phasenschieberanlage, welche auch Bestandteil einer Schalteranlage bzw. eines Generatorschalters der Phasenschieberanlage sein kann, mit dem Eigenbedarfstransformator elektrisch verbunden sein, welche in dem Normalbetrieb derart geschaltet werden kann, dass mittels der in dem Normalbetrieb in dem Phasenschieberbetrieb betriebenen Synchronmaschine erzeugte Blindleistung zur Deckung eines Blindleistungsbedarfs der Mehrzahl von Hilfsverbrauchern über den Eigenbedarfstransformator in die Mittelspannungsschaltanlage eingespeist werden kann. Bei dem Umschalten der Phasenschieberanlage in den Notstrombetrieb kann die zweite Schalteinrichtung derart geschaltet werden, dass ein elektrischer Energiefluss über den Eigenbedarfstransformator unterbrochen werden kann. Über die zweite Schalteinrichtung kann die Synchronmaschine auch mit dem Maschinentransformator elektrisch verbunden sein, so dass bei dem Umschalten der Phasenschieberanlage in den Notstrombetrieb bzw. dem Schalten der zweiten Schalteinrichtung auch ein elektrischer Energiefluss über den Maschinentransformator zur Unterbrechung der elektrischen Verbindung der Phasenschieberanlage mit dem Netz unterbrochen werden kann. Grundsätzlich ist es jedoch auch denkbar, die Synchronmaschine über zwei verschiedene Schalteinrichtungen der Phasenschieberanlage bzw. Schalteranlage einerseits mit dem Eigenbedarfstransformator und andererseits mit dem Maschinentransformator elektrisch zu verbinden.

Zudem kann die Phasenschieberanlage eine Anfahreinrichtung umfassen. Die Anfahreinrichtung kann in einem Anfahrbetrieb bzw. Wiederanfahrbetrieb der Phasenschieberanlage, in welchem die Synchronmaschine in einem Motorbetrieb betrieben werden kann, zu einem Anfahren bzw. Wiederanfahren des rotierenden Phasenschiebers verwendet werden. Dabei kann die Anfahreinrichtung über eine erste Schalteinrichtung der Phasenschieberanlage, welche auch Bestandteil der Schalteranlage bzw. des Generatorschalters sein kann, mit der Synchronmaschine elektrisch verbunden sein. Weiter kann die Anfahreinrichtung mit der Mittelspannungsschaltanlage elektrisch verbunden sein. Ferner kann die Anfahreinrichtung einen Anfahrtransformator und einen mit dem Anfahrtransformator elektrisch verbundenen, vorzugsweise statischen, Frequenzumrichter, welcher einen Wechselrichter und einen Gleichrichter umfassen kann, umfassen. Die Anfahreinrichtung kann dann über den Anfahrtransformator mit der Mittelspannungsschaltanlage elektrisch verbunden sein, so dass der Anfahrtransformator zwischen der Mittelspannungsschaltanlage und dem mit der Synchronmaschine elektrisch verbundenen Frequenzumrichter angeordnet sein kann.

In einer bevorzugten Ausführungsform der Phasenschieberanlage kann in dem Notstrombetrieb zumindest der Teil der Mehrzahl von Hilfsverbrauchern über die Anfahreinrichtung mit der elektrischen Energie versorgbar sein. Mittels des Frequenzumrichters kann aus der Klemmenspannung, deren Frequenz infolge des Abfahrens des rotierenden Phasenschiebers kontinuierlich abnehmen kann, eine Spannung mit einer festen Frequenz erhalten werden, welche dann insbesondere zur Energieversorgung zumindest des Teils der Mehrzahl von Hilfsverbrauchern verwendet werden kann. Vorzugsweise ist der Frequenzumrichter ein statischer Frequenzumrichter (SFC), da dieser rückspeisefähig ist und ein gesamtes Frequenzband von 0 Hz bis 52,5 Hz abdecken kann. Die elektrische Energie kann in dem Notstrombetrieb über die Anfahreinrichtung in die Mittelspannungsschaltanlage eingespeist werden, von wo aus die elektrische Energie sodann insbesondere zu zumindest dem Teil der Mehrzahl von Hilfsverbrauchern gelangen kann. Dabei kann die erste Schalteinrichtung bei dem Umschalten der Phasenschieberanlage in den Notstrombetrieb derart geschaltet werden, dass die elektrische Energie über die Anfahreinrichtung in die Mittelspannungsschaltanlage eingespeist werden kann.

Weiter kann die Phasenschieberanlage ein Erregersystem zur Ausbildung einer die Synchronmaschine erregenden Erregerleistung umfassen. Das Erregersystem kann eine Erregerwicklung, welche an der Synchronmaschine angeordnet sein kann, und eine Erregereinrichtung umfassen, derart, dass mittels der Erregereinrichtung eine in der Erregerwicklung ausbildbare Erregerleistung bzw. ein in der Erregerwicklung ausbildbarer Erregerstrom einstellbar ist. Die Erregereinrichtung kann einen Erregertransformator und ein Stellglied umfassen, wobei das Stellglied eine Regelung bzw. einen Regler zur Einstellung der Erregerleistung aufweisen kann. Das Stellglied kann ein Halbleiterstellglied, z. B. ein Thyristorstellglied bzw. Thyristorsteller, sein. Das Halbleiterstellglied kann jedoch auch ein Transistorstellglied sein. Das Stellglied kann als Stromrichter fungieren, so dass in der Erregerwicklung der Erregerstrom als ein Gleichstrom ausgebildet werden kann. Die Erregereinrichtung kann über den Erregertransformator mit der Mittelspannungsschaltanlage elektrisch verbunden sein, so dass der Erregertransformator zwischen der Mittelspannungsschaltanlage und dem mit der Erregerwicklung elektrisch verbundenen Stellglied angeordnet sein kann. Zwischen dem Erregertransformator und der Erregerwicklung kann eine Schalteinrichtung bzw. ein Schalter vorgesehen sein, welche bzw. welcher auch Bestandteil des Stellglieds sein kann. In dem Normalbetrieb kann die aus dem Netz über den Eigenbedarfstransformator in die Mittelspannungsanlage eingespeiste elektrische Energie dann auch zur Energieversorgung des Erregersystems zur Ausbildung der Erregerleistung verwendet werden.

In einer bevorzugten Ausführungsform der Phasenschieberanlage kann die elektrische Energie in dem Notstrombetrieb ferner zur Ausbildung der Erregerleistung vorgesehen sein. Auf eine große Batterieanlage oder dergleichen zur Speisung des Erregersystems mit elektrischer Energie kann dann vorteilhaft verzichtet werden.

In einer bevorzugten Ausführungsform der Phasenschieberanlage kann die Phasenschieberanlage eine erste Batterieanlage zur unterbrechungsfreien Energieversorgung des Erregersystems von einem Zeitpunkt des Netzausfalls bis zu einem Zeitpunkt eines Beginns des Notstrombetriebs umfassen. Ein Vorgang eines Erkennens des Netzausfalls und des Umschaltens der Phasenschieberanlage von dem Normalbetrieb in den Notstrombeginn, wodurch der Beginn des Notstrombetriebs initiiert wird, kann regelmäßig eine Umschaltzeit von einigen Sekunden in Anspruch nehmen. Ein maximales Zeitfenster kann etwa 10 s betragen. Um eine unterbrechungsfreie Ausbildung der Erregerleistung sicherzustellen, kann die Phasenschieberanlage die erste Batterieanlage aufweisen, welche das Erregersystem in dem durch den Zeitpunkt des Netzausfalls und den Zeitpunkt des Beginns des Notstrombetriebs definierten Zeitfenster energieversorgen kann. Eine Batterie der ersten Batterieanlage kann über einen Wechselrichter, welchen die erste Batterieanlage umfassen kann, zwischen dem Erregertransformator und dem Stellglied angeschlossen sein, so dass die Regelung der Erregerspannung ohne zusätzlichen Aufwand über das Stellglied bzw. je nach dessen Ausführung über Thyristoren des Thyristorstellglieds abgewickelt werden kann. Sobald die Ausbildung der Erregerleistung nach dem Umschalten der Phasenschieberanlage in den Notstrombetrieb über die von der Synchronmaschine bereitgestellte elektrische Energie erfolgen kann, kann die Energieversorgung über die erste Batterieanlage abgeschaltet werden.

In einer bevorzugten Ausführungsform der Phasenschieberanlage kann die Phasenschieberanlage eine, insbesondere mit Kondensatoren ausgebildete und/oder durch eine abkoppelbare Synchronmaschine ausgeführte, Blindleistungskompensationsanlage zur Kompensation eines Blindleistungsbedarfs zumindest des Teils der Mehrzahl von Hilfsverbrauchern, insbesondere in dem Notstrombetrieb, umfassen. Die Blindleistungskompensationsanlage kann mit der Mittelspannungsschaltanlage elektrisch verbunden sein, so dass mittels der Blindleistungskompensationsanlage bereitgestellte Blindleistung in die Mittelspannungsschaltanlage eingespeist werden kann. Bei dem Umschalten der Phasenschieberanalage in den Notstrombetrieb kann die Blindleistungskompensationsanlage zugeschaltet werden. Grundsätzlich wäre jedoch auch eine Einspeisung der Blindleistung in die Niederspannungsebene denkbar, insbesondere, wenn in dem Notstrombetrieb nur als Niederspannungs-Hilfsverbraucher ausgebildete Hilfsverbraucher mit der elektrischen Energie versorgt werden sollen.

In einer bevorzugten Ausführungsform der Phasenschieberanlage kann die Phasenschieberanlage eine Schaltanlage, insbesondere Niederspannungs-Schaltanlage, umfassen, mit welcher die Mehrzahl von Hilfsverbrauchern elektrisch verbunden sein kann, wobei die Schaltanlage eine Normalbetriebsschiene, mit welcher die Mehrzahl von Hilfsverbrauchern elektrisch verbunden sein kann, und eine Notstrombetriebsschiene, mit welcher ausschließlich der notstromberechtigte Teil der Mehrzahl von Hilfsverbrauchern elektrisch verbunden sein kann, umfassen kann, wobei die Schaltanlage bei dem Umschalten in den Notstrombetrieb schaltbar sein kann, derart, dass nach dem Schalten der Schaltanlage ausschließlich der notstromberechtigte Teil der Mehrzahl von Hilfsverbrauchern mit der elektrischen Energie versorgbar sein kann. Wenn die Schaltanlage eine Niederspannungs-Schaltanlage ist, kann die Niederspannungs-Schaltanlage über den Niederspannungstransformator mit der Mittelspannungsschaltanlage elektrisch verbunden sein. Die Schaltanlage kann Umrichter und/oder Gleichspannungswandler und/oder Transformatoren aufweisen, um verschiedene Spannungslevel des notstromberechtigten Teils der Mehrzahl von Hilfsverbrauchern zu bedienen.

In einer bevorzugten Ausführungsform der Phasenschieberanlage kann die Phasenschieberanlage eine zweite Batterieanlage zur unterbrechungsfreien Energieversorgung zumindest des Teils der Mehrzahl von Hilfsverbrauchern von einem Zeitpunkt des Netzausfalls bis zu einem Zeitpunkt eines Beginns des Notstrombetriebs und/oder zur zumindest teilweisen Energieversorgung zumindest des Teils der Mehrzahl von Hilfsverbrauchern nach einem Zeitpunkt eines Erreichens eines Schwellenwerts einer Drehzahl des rotierenden Phasenschiebers, vorzugsweise von 5 Hz, und/oder zur zumindest teilweisen Energieversorgung zumindest des Teils der Mehrzahl von Hilfsverbrauchern nach dem Abfahren des rotierenden Phasenschiebers umfassen. In dem zur Erkennung des Netzausfalls und zum Umschalten der Phasenschieberanlage in den Notstrombetrieb benötigten Zeitfenster kann zumindest der Teil der Mehrzahl von Hilfsverbrauchern somit unterbrechungsfrei energieversorgt werden. Insbesondere kann die zweite Batterieanlage auch eine zum Betrieb der Erkennungseinrichtung und zu dem Umschalten der Phasenschieberanlage in den Notstrombetrieb erforderliche elektrische Energie bereitstellen. Alternativ oder zusätzlich wäre es denkbar, an einer jeden Schaltstelle, an welcher bei dem Umschalten der Phasenschieberanlage in den Notstrombetrieb eine Schalteinrichtung oder dergleichen geschaltet wird, jeweils eine separate, kleine Batterie vorzusehen, aus welcher eine für einen jeweiligen Schaltvorgang erforderliche elektrische Energie bezogen werden kann. Reicht die von der Synchronmaschine bereitgestellte elektrische Energie bei einem Unterschreiten eines Schwellenwerts einer Drehzahl des rotierenden Phasenschiebers, vorzugsweise von 5 Hz, zur Energieversorgung der bei dieser Drehzahl zu versorgenden Hilfsverbraucher nicht mehr aus, so kann die zweite Batterieanlage weiter zur Energieversorgung dieser Hilfsverbraucher verwendet werden. Bei einem Erreichen bzw. Unterschreiten des Schwellenwerts kann der Rückspeisebetrieb dann gegebenenfalls abgeschaltet werden. Ferner kann die zweite Batterieanlage zur Energieversorgung der nach einem Stillstand des rotierenden Phasenschiebers, ab dem die Synchronmaschine keine elektrische Energie mehr bereitstellt, zu versorgenden Hilfsverbraucher verwendet werden. Insbesondere ein Leittechniksystem der Phasenschieberanlage und/oder eine Notbeleuchtung der Phasenschieberanlage können so weiterversorgt werden. Eine Anzahl der während des Abfahrens zu versorgenden Hilfsverbraucher kann mit abnehmender Drehzahl des rotierenden Phasenschiebers variieren, das heißt zunehmen und/oder abnehmen. Weiter kann ein Dieselaggregat vorgesehen sein, welches die zu versorgenden Hilfsverbraucher nach dem Abfahren des rotierenden Phasenschiebers energieversorgen kann. Das Dieselaggregat kann an der Schaltanlage bzw. Niederspannungs-Schaltanlage elektrisch angeschlossen sein. Das Dieselaggregat kann einen Dieselmotor und einen Generator umfassen. Das Dieselaggregat kann die als abkoppelbare Synchronmaschine ausgeführte Blindleistungskompensationsanlage umfassen.

In einer bevorzugten Ausführungsform der Phasenschieberanlage kann die Phasenschieberanlage ein Dieselaggregat für einen Wiederanfahrbetrieb der Phasenschieberanlage nach einer Netzwiederkehr umfassen. Das Dieselaggregat kann einen Dieselmotor und einen Generator umfassen. In dem Wiederanfahrbetrieb kann das Dieselaggregat dann insbesondere die Anfahreinrichtung und zumindest einen für den Wiederanfahrbetrieb notwendigen Teil der Mehrzahl von Hilfsverbrauchern energieversorgen. Das Dieselaggregat kann vorteilhafterweise mit der Mittelspannungsschaltanlage elektrisch verbunden sein. Das Dieselaggregat kann die als abkoppelbare Synchronmaschine ausgeführte Blindleistungskompensationsanlage umfassen.

Weitere vorteilhafte Ausführungsformen des Phasenschieberanlage ergeben sich aus den Merkmalsbeschreibungen der auf den Verfahrensanspruch 10 rückbezogenen Unteransprüche.

Bei dem erfindungsgemäßen Verfahren zum Betrieb einer Phasenschieberanlage, wobei die Phasenschieberanlage einen rotierenden Phasenschieber, welcher eine, insbesondere mit einer Schwungmasse mechanisch gekoppelte, Synchronmaschine umfasst, und eine Mehrzahl von elektrischen Hilfsverbrauchern umfasst, wird die Phasenschieberanlage bei einem Netzausfall zu einem kontrollierten Abfahren des rotierenden Phasenschiebers von einem Normalbetrieb der Phasenschieberanlage in einen Notstrombetrieb der Phasenschieberanlage umgeschaltet, in welchem eine Rotationsenergie des rotierenden Phasenschiebers mittels der in dem Notstrombetrieb in einem Generatorbetrieb betriebenen Synchronmaschine in eine elektrische Energie umgewandelt wird, welche zumindest zeitweise zur Versorgung zumindest eines, vorzugsweise notstromberechtigten, Teils der Mehrzahl von, insbesondere als Niederspannungs-Hilfsverbraucher ausgebildeten, Hilfsverbrauchern während des Abfahrens des rotierenden Phasenschiebers verwendet wird.

Zu den vorteilhaften Wirkungen des erfindungsgemäßen Verfahrens wird auf die Vorteilsbeschreibung der erfindungsgemäßen Phasenschieberanlage verwiesen.

In einer bevorzugten Ausführungsform des Verfahrens kann bei dem Umschalten der Phasenschieberanlage in den Notstrombetrieb die erste Schalteinrichtung der Phasenschieberanlage, über welche die Synchronmaschine mit der mit der Mittelspannungsschaltanlage der Phasenschieberanlage elektrisch verbundenen Anfahreinrichtung der Phasenschieberanlage elektrisch verbunden sein kann, geschaltet werden, derart, dass die elektrische Energie über die Anfahreinrichtung in die Mittelspannungsschaltanlage eingespeist werden kann, wobei zumindest der Teil der Mehrzahl von Hilfsverbrauchern über die Mittelspannungsschaltanlage mit der elektrischen Energie versorgt werden kann.

In einer bevorzugten Ausführungsform des Verfahrens kann bei dem Umschalten der Phasenschieberanlage in den Notstrombetrieb die zweite Schalteinrichtung der Phasenschieberanlage, über welche die Synchronmaschine mit dem Maschinentransformator der Phasenschieberanlage und/oder mit dem mit der Mittelspannungsschaltanlage elektrisch verbundenen Eigenbedarfstransformator der Phasenschieberanlage elektrisch verbunden sein kann, geschaltet werden, derart, dass der elektrische Energiefluss über den Maschinentransformator und/oder den Eigenbedarfstransformator unterbrochen werden kann.

In einer bevorzugten Ausführungsform des Verfahrens kann zumindest der über den Niederspannungstransformator der Phasenschieberanlage und die Niederspannungs-Schaltanlage der Phasenschieberanlage mit der Mittelspannungsschaltanlage elektrisch verbundene Teil der Mehrzahl von als Niederspannungs-Hilfsverbraucher ausgebildeten Hilfsverbrauchern mit der elektrischen Energie versorgt werden.

In einer bevorzugten Ausführungsform des Verfahrens kann ferner das mit der Mittelspannungsanlage elektrisch verbundene Erregersystem der Phasenschieberanlage zur Ausbildung der die Synchronmaschine erregenden Erregerleistung mit der elektrischen Energie versorgt werden.

In einer bevorzugten Ausführungsform des Verfahrens kann die mittels des Erregersystems ausgebildete, die Synchronmaschine erregende Erregerleistung mit einer bei dem Abfahren des rotierenden Phasenschiebers abnehmenden Drehzahl des rotierenden Phasenschiebers erhöht werden, derart, dass die Klemmenspannung der Synchronmaschine konstant gehalten werden kann. Das Stellglied kann über eine von dem Inselnetz geführte Regelungsstrecke eine Erregerspannung auf eine jeweilige Frequenz anpassen, das heißt kontinuierlich erhöhen. Die Regelung kann eine Programmierung aufweisen, welche bei dem Netzausfall den Rückspeisebetrieb erkennen und so die Klemmenspannung auf einen festen Wert regeln kann. An dem Frequenzumrichter der Anfahreinrichtung kann dann in dem Notstrombetrieb eine konstante Eingangsspannung anliegen, so dass der Frequenzumrichter die Eingangsspannung weder erhöhen noch absenken muss. Der Anfahrtransformator kann daher die elektrische Energie über ein festes Übersetzungsverhältnis in die Mittelspannungsschaltanlage einspeisen.

In einer bevorzugten Ausführungsform des Verfahrens kann die Mehrzahl von Hilfsverbrauchern ein Schmiermittelsystem zur Versorgung von Lagern des rotierenden Phasenschiebers mit einem Schmiermittel, insbesondere Schmieröl, umfassen, wobei das Schmiermittelsystem, vorzugsweise von einem Zeitpunkt eines Beginns des Notstrombetriebs zumindest bis zu einem Zeitpunkt eines Erreichens eines ersten Schwellenwerts einer Drehzahl des rotierenden Phasenschiebers, vorzugsweise von 5 Hz, mit der elektrischen Energie versorgt werden kann. Die Lager können vorzugsweise Wälzlager, jedoch grundsätzlich auch Gleitlager sein. Es können Lager für die Welle und gegebenenfalls die Schwungmasse bzw. das Schwungrad vorgesehen sein, beispielsweise jeweils zwei. Die Schwungmasse, welche aus Stahl ausgebildet sein kann, kann auf der Welle der Synchronmaschine angeordnet, und dadurch mit der Welle der Synchronmaschine mechanisch gekoppelt, sein, oder kann auf einer Welle des rotierenden Phasenschiebers angeordnet sein, wobei die Welle des rotierenden Phasenschiebers dann mit der Welle der Synchronmaschine mechanisch gekoppelt bzw. mechanisch koppelbar sein kann. Weiter kann die Welle bzw. ein Rotor der Synchronmaschine auf, insbesondere zwei, Lagerböcken gelagert sein. Das Schmiermittelsystem kann einen Schmiermittelbehälter zur Speicherung des Schmiermittels und Pumpeneinrichtungen bzw. Ölpumpen zum Zirkulieren des Schmiermittels in einem Schmiermittelkreislauf des Schmiermittelsystems umfassen. Weiter kann das Schmiermittelsystem einen Absaugventilator für einen Schmiermitteldunst umfassen. In einer Wärmetauschereinrichtung kann das Schmiermittel aus den Lagern abgeführte, in den Lagern infolge von Reibung entstandene Wärme auf ein Kühlmittel abgeben. In dem Normalbetrieb, in welchem die Pumpeneinrichtungen betrieben werden können, kann sich ein Lagerschmierfilm aus dem Schmiermittel zwischen der Welle und den Lagern bilden, welcher auch als hydrodynamischer Keil bezeichnet wird. Die Schmierung kann hier nahezu drucklos erfolgen. Bei dem Abfahren des rotierenden Phasenschiebers in dem Notstrombetrieb kommt es bei einem Unterschreiten eines kritischen Schwellenwertes einer Drehzahl des rotierenden Phasenschiebers, welcher beispielsweise bei 45 Hz liegen kann, zu einem Zusammenbruch des hydrodynamischen Keils, so dass sich eine Mischreibung ausbilden kann. Um den Schmierfilm in diesem Fall aufrechterhalten zu können, kann das Schmiermittelsystem Anhebepumpeneinrichtungen bzw. Anhebeölpumpen umfassen, welche von einem Zeitpunkt des Unterschreitens des kritischen Schwellenwerts zumindest bis zu dem Zeitpunkt des Erreichens des ersten Schwellenwerts zusätzlich zu den Pumpeneinrichtungen mit der elektrischen Energie versorgt werden können, so dass eine dann hydrostatische Schmierung ermöglicht werden kann. Demnach kann das Schmiermittelsystem Pumpeneinrichtungen umfassen, welche von einem Zeitpunkt eines Beginns des Notstrombetriebs bis zumindest zu einem Zeitpunkt eines Erreichens eines ersten Schwellenwerts einer Drehzahl des rotierenden Phasenschiebers, vorzugsweise von 5 Hz, mit der elektrischen Energie versorgt werden können, wobei das Schmiermittelsystem Anhebepumpeneinrichtungen umfassen kann, welche von einem Zeitpunkt eines Unterschreitens eines kritischen Schwellenwertes einer Drehzahl des rotierenden Phasenschiebers, vorzugsweise von 45 Hz, bis zumindest zu dem Zeitpunkt des Erreichens des ersten Schwellenwerts mit der elektrischen Energie versorgt werden können. Grundsätzlich ist es jedoch auch denkbar, dass die Anhebepumpeneinrichtungen auch schon von einem Zeitpunkt eines Beginns des Notstrombetriebs an mit der elektrischen Energie versorgt werden. Bei dem Erreichen des ersten Schwellenwertes kann die Energieversorgung des Schmiermittelsystems bis hin zu einem Zeitpunkt eines Erreichens eines Stillstands des rotierenden Phasenschiebers mittels der zweiten Batterieanlage erfolgen. Grundsätzlich ist es jedoch auch möglich, dass das Schmiermittelsystem, gegebenenfalls zusätzlich zu der Energieversorgung mittels der zweiten Batterieanlage, bis zu dem Zeitpunkt des Erreichens des Stillstands des rotierenden Phasenschiebers mit der elektrischen Energie versorgt wird.

In einer bevorzugten Ausführungsform des Verfahrens kann die Mehrzahl von Hilfsverbrauchern ein Vakuumsystem zum Absaugen von Luft aus einem die Schwungmasse des rotierenden Phasenschiebers aufnehmenden, luftdicht versiegelten Gehäuse des rotierenden Phasenschiebers umfassen, wobei das Vakuumsystem, vorzugsweise von einem Zeitpunkt eines Beginns des Notstrombetriebs bis zumindest zu einem Zeitpunkt eines Erreichens eines zweiten Schwellenwerts einer Drehzahl des rotierenden Phasenschiebers, vorzugsweise von 33,5 Hz, mit der elektrischen Energie versorgt werden kann. Beim Rotieren der Schwungmasse entstehen Luftreibungsverluste mit Umgebungsluft. Um diese zu minimieren, kann die Schwungmasse in dem, vorzugsweise druckfesten, Gehäuse angeordnet werden und Luft aus dem Gehäuse über eine Pumpenvorrichtung des Vakuumsystems abgesaugt werden, um einen Druck innerhalb des Gehäuses zu senken. Die Luftreibungsverluste können dadurch reduziert werden. Entstehende Abwärme aus einem Betrieb der Pumpenvorrichtung kann über eine Wärmetauschereinrichtung auf das Kühlmittel übertragen werden. Weiter kann das Vakuumsystem eine motorbetriebene Absperrklappe umfassen. Zu dem Zeitpunkt des Erreichens des zweiten Schwellenwerts kann das Vakuumsystem abgeschaltet werden.

In einer bevorzugten Ausführungsform des Verfahrens kann die Mehrzahl von Hilfsverbrauchern ein Kühlluftsystem zur Kühlung des rotierenden Phasenschiebers mit Luft umfassen, wobei das Kühlluftsystem, vorzugsweise von einem Zeitpunkt eines Beginns des Notstrombetriebs bis zumindest zu einem Zeitpunkt eines Erreichens eines dritten Schwellenwerts einer Drehzahl des rotierenden Phasenschiebers, vorzugsweise von 5 Hz, mit der elektrischen Energie versorgt werden kann. Die Synchronmaschine, insbesondere der Rotor und/oder ein Stator der Synchronmaschine, kann durch Luft gekühlt werden. Hierfür kann Luft bzw. Kühlluft durch mehrere Kammern in dem Stator verteilt werden, was zu einer effizienten Wärmeübertragung führen kann. Wenn die Kammern auf eine gesamte Länge der Synchronmaschine verteilt sind, kann hierbei eine sehr gleichmäßige Temperaturverteilung innerhalb des Stators erreicht werden. Auch der Rotor kann von Luft bzw. Kühlluft umströmt werden. Rotorwicklungen können direkt axial angeströmt werden, wodurch auch hier mit einer hohen Temperaturgleichmäßigkeit alle Teile, wie auch Wicklungsköpfe, ausreichend gekühlt werden können. Die Luft bzw. Kühlluft selbst kann durch eine Luft-Kühlmittel-Wärmetauschereinrichtung in einem unteren Teil eines Gehäuses der Synchronmaschine erzeugt werden. Mittels des Kühlluftsystems kann zur Erhöhung einer Dichte der Luft bzw. Kühlluft in dem Gehäuse der Synchronmaschine ein Überdruck erzeugt werden, um mit gleicher Luftumwälzung eine größere Abkühlung von dem Rotor und dem Stator zu erreichen. Auch die Schwungmasse kann mittels des Kühlluftsystems gekühlt werden. Weiter kann das Kühlluftsystem motorbetriebene Jalousieklappen, Ventilatoren und Heiz-Kühl-Geräte umfassen. Zu dem Zeitpunkt des Erreichens des dritten Schwellenwerts kann das Kühlluftsystem abgeschaltet werden. Anstelle von Luft bzw. Kühlluft als Kühlmedium wäre grundsätzlich auch ein anderes Kühlmedium denkbar.

In einer bevorzugten Ausführungsform des Verfahrens kann die Mehrzahl von Hilfsverbrauchern ein Kühlmittelsystem zur Kühlung von dem Schmiermittel und/oder der abgesaugten Luft bzw. der Kühlluft mit dem Kühlmittel, insbesondere Wasser, umfassen, wobei das Kühlmittelsystem, vorzugsweise von einem Zeitpunkt eines Beginns des Notstrombetriebs bis zumindest zu einem Zeitpunkt eines Erreichens eines vierten Schwellenwerts einer Drehzahl des rotierenden Phasenschiebers, vorzugsweise von 5 Hz, mit der elektrischen Energie versorgt werden kann. Das Kühlmittelsystem kann einen Kühlmittelkreislauf und eine Pumpenvorrichtung bzw. Kühlwasserpumpe zur Zirkulation des Kühlmittels in dem Kühlmittelkreislauf umfassen. Weiter kann das Kühlmittelsystem zumindest ein Kühlmittelregelventil und/oder zumindest eine Rückkühleinrichtung umfassen. Ferner kann das Kühlmittelsystem die Wärmetauschereinrichtungen zur Übertragung der Wärme von der mittels des Vakuumsystems abgesaugten Luft auf das Kühlmittel, zur Übertragung der Wärme von der zur Kühlung des rotierenden Phasenschiebers, das heißt des Rotors, des Stators und der Schwungmasse, vorgesehenen Luft bzw. Kühlluft auf das Kühlmittel und zur Übertragung der Wärme von dem Schmiermittel auf das Kühlmittel umfassen. Zu dem Zeitpunkt des Erreichens des vierten Schwellenwerts kann das Kühlmittelsystem abgeschaltet werden.

In einer bevorzugten Ausführungsform des Verfahrens kann die Mehrzahl von Hilfsverbrauchern ein Leittechniksystem umfassen, wobei das Leittechniksystem, vorzugsweise von einem Zeitpunkt eines Beginns des Notstrombetriebs bis zumindest zu einem Zeitpunkt eines Erreichens eines fünften Schwellenwerts einer Drehzahl des rotierenden Phasenschiebers, vorzugsweise von 5 Hz, mit der elektrischen Energie versorgt werden kann. Das Leittechniksystem kann eine Steuereinrichtung zur Steuerung der Phasenschieberanlage umfassen, welche insbesondere auch die Mehrzahl der Hilfsverbraucher und das Umschalten der Phasenschieberanlage von dem Normalbetrieb in den Notstrombetrieb steuern kann. Das Leittechniksystem kann Geräte zur Kommunikation, insbesondere Computer und Server, umfassen. Bei dem Erreichen des fünften Schwellenwertes kann die Energieversorgung des Leittechniksystems bis hin zu einem Zeitpunkt eines Erreichens eines Stillstands des rotierenden Phasenschiebers mittels der zweiten Batterieanlage erfolgen. Grundsätzlich ist es jedoch auch möglich, dass das Leittechniksystem, gegebenenfalls zusätzlich zu der Energieversorgung mittels der zweiten Batterieanlage, bis zu dem Zeitpunkt des Erreichens des Stillstands des rotierenden Phasenschiebers mit der elektrischen Energie versorgt wird.

Die vorstehend genannten fünf Schwellenwerte können paarweise voneinander verschieden, nur teilweise voneinander verschieden bzw. teilweise identisch oder allesamt identisch sein.

Die Mehrzahl von Hilfsverbrauchern kann weitere Hilfsverbraucher umfassen, beispielsweise eine Notbeleuchtung, eine Brandmeldeanlage, sowie eine Einbruch- und Gefahrenmeldeanlage. Diese können beispielsweise ebenso wie das Leittechniksystem energieversorgt werden.

Der notstromberechtigte Teil der Mehrzahl von Hilfsverbrauchern kann zumindest das Schmiermittelsystem und/oder das Vakuumsystem und/oder das Kühlluftsystem und/oder das Kühlmittelsystem und/oder das Leittechniksystem umfassen, um ein kontrolliertes bzw. beschädigungsfreies Abfahren des rotierenden Phasenschiebers zu ermöglichen.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: ein vereinfachter Übersichtsschaltplan einer Phasenschieberanlage,
- **Fig. 2**: eine vereinfachte Darstellung eines Schienenkonzepts zur Energieversorgung von notstromberechtigten Hilfsverbrauchern einer Phasenschieberanlage.

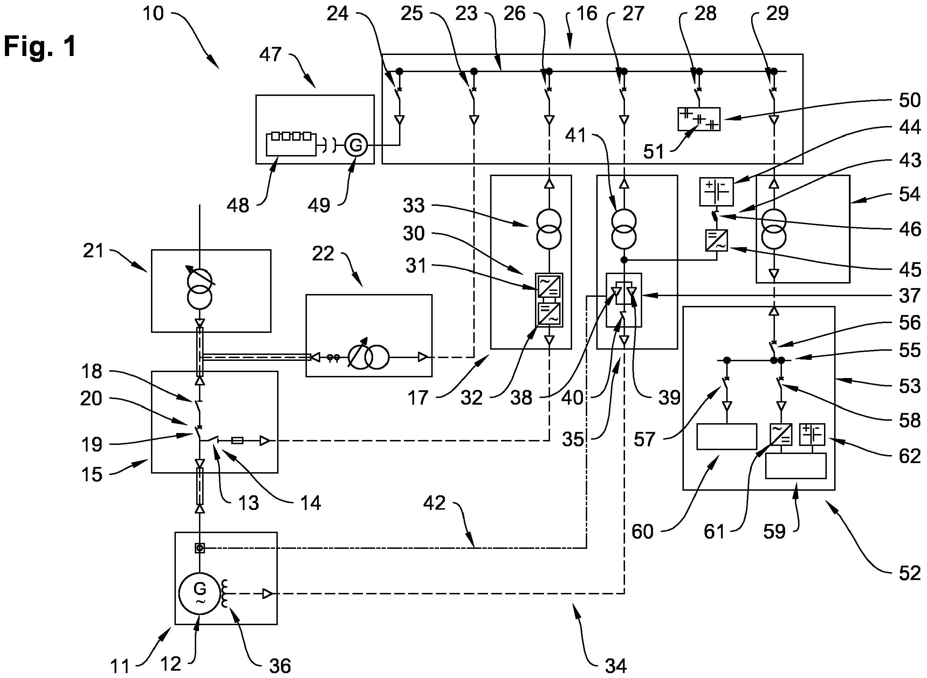

Die **Fig. 1** zeigt einen Übersichtsschaltplan einer Phasenschieberanlage 10, welche einen rotierenden Phasenschieber 11 mit einer Synchronmaschine 12 umfasst, wobei die Synchronmaschine 12 über eine einen Schalter 13 umfassende erste Schalteinrichtung 14 einer Schalteranlage 15 der Phasenschieberanlage 10 mit einer mit einer Mittelspannungsschaltanlage 16 der Phasenschieberanlage 10 elektrisch verbundenen Anfahreinrichtung 17 der Phasenschieberanlage 10 elektrisch verbunden ist. Weiter ist die Synchronmaschine 12 über eine zwei Schalter 18, 19 umfassende zweite Schalteinrichtung 20 der Schalteranlage 15 mit einem Maschinentransformator 21, über welchen die Phasenschieberanlage 10 an ein hier nicht gezeigtes Netz koppelbar ist, und mit einem mit der Mittelspannungsschaltanlage 16 elektrisch verbundenen Eigenbedarfstransformator 22 der Phasenschieberanlage 10 elektrisch verbunden. Die Schalteranlage 15 ist beispielsweise ein Generatorschalter.

Die Mittelspannungsschaltanlage 16 umfasst eine Mittelspannungsschiene 23 und Schalter 24, 25, 26, 27, 28, 29, über welche die jeweiligen Komponenten mit der Mittelspannungsschiene 23 elektrisch verbunden sind.

Die Anfahreinrichtung 17 umfasst einen mit der Synchronmaschine 12 über die erste Schalteinrichtung 14 elektrisch verbundenen statischen Frequenzumrichter 30, welcher einen Gleichrichter 31 und einen Wechselrichter 32 umfasst, und einen mit dem Frequenzumrichter 30 und der Mittelspannungsschaltanlage 16 elektrisch verbundenen Anfahrtransformator 33.

Weiter umfasst die Phasenschieberanlage 10 ein Erregersystem 34 zur Ausbildung einer die Synchronmaschine 12 erregenden Erregerleistung, welche eine Erregereinrichtung 35 und eine Erregerwicklung 36 umfasst. Die Erregereinrichtung 35 umfasst ein mit der Erregerwicklung 36 elektrisch verbundenes Thyristorstellglied 37 mit Thyristoren 38, 39 und einem Schalter 40 sowie einen mit dem Thyristorstellglied 37 und der Mittelspannungsschaltanlage 16 elektrisch verbundenen Erregertransformator 41. Das Thyristorstellglied 37 weist ferner eine Regelung zur Einstellung eines in der Erregerwicklung 36 ausbildbaren Erregerstroms auf, wobei eine Regelstrecke hier schematisch durch eine Wirklinie 42 angedeutet ist. Ferner umfasst die Phasenschieberanlage 10 eine erste Batterieanlage 43, welche zwischen dem Thyristorstellglied 37 und dem Erregertransformator 41 angeschlossen ist. Die zweite Batterieanlage 43 ihrerseits umfasst eine Batterie 44, einen Gleichrichter 45 und einen zwischen der Batterie 44 und dem Gleichrichter 45 angeordneten Schalter 46.

Zudem umfasst die Phasenschieberanlage 10 ein mit der Mittelspannungsschaltanlage 16 elektrisch verbundenes Dieselaggregat 47, welches einen Dieselmotor 48 und einen Generator 49 umfasst, und eine ebenfalls mit der Mittelspannungsschaltanlage 16 verbundene Blindleistungskompensationsanlage 50 mit Kondensatoren 51.

Ferner umfasst die Phasenschieberanlage 10 eine Mehrzahl von insbesondere als Niederspannungs-Hilfsverbraucher ausgebildeten Hilfsverbrauchern 52, von denen hier nur ein notstromberechtigter Teil dargestellt ist, wobei die Mehrzahl von Hilfsverbrauchern 52 über eine Niederspannungs-Schaltanlage 53 der Phasenschieberanlage 10 und einen Niederspannungstransformator 54 der Phasenschieberanlage 10 mit der Mittelspannungsschaltanlage 16 elektrisch verbunden ist, wobei die Niederspannungs-Schaltanlage 53 mit dem mit der Mittelspannungsschaltanlage 16 elektrisch verbundenen Niederspannungstransformator 54 elektrisch verbunden ist.

Die Niederspannungs-Schaltanlage 53 umfasst eine hier nicht gezeigte Normalbetriebsschiene, mit welcher die Mehrzahl von Hilfsverbrauchern 52 elektrisch verbunden ist, eine Notstrombetriebsschiene 55, mit welcher nur der notstromberechtigte Teil der Hilfsverbraucher 52 elektrisch verbunden ist und Schalter 56, 57, 58. Die Normalbetriebsschiene und die Notstrombetriebsschiene 55 sind jeweils als eine Niederspannungsschiene ausgebildet. Der notstromberechtigte Teil der Hilfsverbraucher 52 umfasst Gleichspannungs-Hilfsverbraucher 59 und Wechselspannungs-Hilfsverbraucher 60, wobei die Gleichspannungs-Hilfsverbraucher 59 über einen Gleichrichter 61 der Niederspannungs-Schaltanlage 53 mit der Notstrombetriebsschiene 55 elektrisch verbunden sind. Der Gleichrichter 61 und die Gleichspannungs-Hilfsverbraucher 59 bilden eine Gleichspannungs-Schaltanlage. Weiter umfasst die Phasenschieberanlage 10 eine zweite Batterieanlage 62, welche mit den Gleichspannungs-Hilfsverbrauchern 59 elektrisch verbunden ist, jedoch grundsätzlich auch alternativ oder zusätzlich über einen Wechselrichter mit den Wechselspannungs-Hilfsverbrauchern 60 elektrisch verbunden sein kann.

Die elektrischen Verbindungen zwischen den Komponenten erfolgen jeweils über elektrische Leitungen, welche der Übersichtlichkeit halber nicht mit gesonderten Bezugszeichen versehen wurden, und gegebenenfalls über Stromschienen. Die elektrischen Leitungen können in Abhängigkeit der elektrisch zu verbindenden Komponenten als, gegebenenfalls gekapselte, Mittelspannungsleitung, Niederspannungsleitung bzw. Gleichspannungsleitung ausgebildet sein.

Die Schalter 13, 18, 40 und 46 sind als Trennschalter ausgebildet. Die Schalter 19, 24, 25, 26, 27, 28, 29, 56, 57 und 58 sind als Leistungsschalter ausgebildet.

Die von der Synchronmaschine 12 erzeugte Klemmenspannung liegt in einem Mittelspannungsbereich, beispielsweise bei 15 kV.

Der Maschinentransformator 21 kann beispielsweise eine Eingangsspannung von 15 kV auf 400 kV transformieren.

Der Eigenbedarfstransformator 22 kann beispielsweise eine Eingangsspannung von 15 kV auf 6 kV transformieren.

Der Anfahrtransformator 33 kann beispielsweise eine Eingangsspannung von 6 kV auf 2,4 kV transformieren.

Der Erregertransformator 41 kann beispielsweise eine Eingangsspannung von 6 kV auf 0,97 kV transformieren.

Der Niederspannungstransformator 54 kann beispielsweise eine Eingangsspannung von 6 kV auf 0,4 kV transformieren.

Bei einem Netzausfall wird die Phasenschieberanlage 10 aus einem Normalbetrieb der Phasenschieberanlage 10 in einen Notstrombetrieb der Phasenschieberanlage 10 umgeschaltet, in welchem die Schalter 18, 19, 25 geöffnet und die Schalter 13, 26, 27, 28, 29, 40, 56, 57, 58 geschlossen sind, derart, dass eine aus einer Rotationsenergie des rotierenden Phasenschiebers 11 mittels der in dem Notstrombetrieb in einem Generatorbetrieb betriebenen Synchronmaschine 12 gewonnene elektrische Energie über die Anfahreinrichtung 17 in die Mittelspannungsschaltanlage 16 rückspeisbar ist, von wo aus die elektrische Energie zumindest zeitweise während eines Abfahrens des rotierenden Phasenschiebers 11 zur Energieversorgung des notstromberechtigten Teils der Hilfsverbraucher 52 zu dem notstromberechtigten Teil der Hilfsverbraucher 52 und zur Energieversorgung des Erregersystems 34 zu dem Erregersystem 34 gelangen kann. In dem Notstrombetrieb kann die Blindleistungskompensationsanlage 50 bei in dem Notstrombetrieb geschlossenem Schalter 28 einen Blindleistungsbedarf des notstromberechtigten Teils der Hilfsverbraucher 52 decken. In einer zu dem Umschalten von dem Normalbetrieb in den Notstrombetrieb benötigten Umschaltzeit kann die erste Batterieanlage 43 durch Schließen des Schalters 46 das Erregersystem 34 und die zweite Batterieanlage 62 die Gleichspannungs-Hilfsverbraucher 59 unterbrechungsfrei energieversorgen, wobei die zweite Batterieanlage 62 die Gleichspannungs-Hilfsverbraucher 59 zudem auch weiterhin energieversorgen kann, wenn eine Drehzahl des rotierenden Phasenschiebers 11 einen Schwellenwert unterschreitet, bei dem die von der Synchronmaschine 12 bereitgestellte elektrische Energie nicht mehr zur Energieversorgung der Gleichspannungs-Hilfsverbraucher 59 ausreicht, und/oder nachdem der rotierende Phasenschieber 11 vollständig abgefahren ist. Das Dieselaggregat 47 kann durch Schließen des Schalters 24 für einen Wiederanfahrbetrieb der Phasenschieberanlage 10 bei einer Netzwiederkehr verwendet werden.

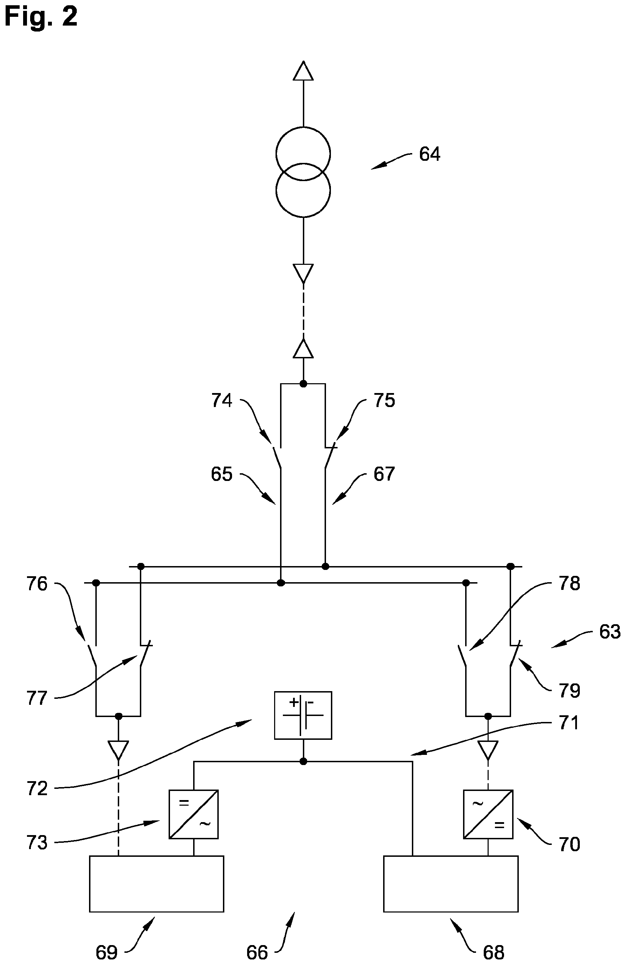

Die Fig. 2 zeigt eine Niederspannungs-Schaltanlage 63 einer hier nicht weiter gezeigten Phasenschieberanlage. Nur noch ein Niederspannungstransformator 64 der Phasenschieberanlage, mit welchem die Niederspannungs-Schaltanlage 63 elektrisch verbunden ist, ist hier ersichtlich. Die Niederspannungs-Schaltanlage 63 umfasst eine Normalbetriebsschiene 65, mit welcher eine Mehrzahl von Hilfsverbrauchern 66 der Phasenschieberanlage elektrisch verbunden ist, und eine Notstrombetriebsschiene 67, mit welcher ausschließlich ein notstromberechtigter Teil der Mehrzahl von Hilfsverbrauchern 66 elektrisch verbunden ist, wobei die Niederspannungs-Schaltanlage 63 bei einem Umschalten der Phasenschieberanlage von einem Normalbetrieb der Phasenschieberanlage in einen Notstrombetrieb der Phasenschieberanlage schaltbar ist, derart, dass nach dem Schalten der Niederspannungs-Schaltanlage 63 ausschließlich der notstromberechtigte Teil der Mehrzahl von Hilfsverbrauchern 66 mit einer in die Niederspannungs-Schaltanlage 63 eingespeisten elektrischer Energie versorgbar ist, was hier jedoch nur schematisch dargestellt ist. Die Normalbetriebsschiene 65 und die Notstrombetriebsschiene 67 sind jeweils als eine Niederspannungsschiene ausgebildet.

Die Mehrzahl von als Niederspannungs-Hilfsverbraucher ausgebildeten Hilfsverbrauchern 66 umfasst Gleichspannungs-Hilfsverbraucher 68 und Wechselspannungs-Hilfsverbraucher 69, wobei die Gleichspannungs-Hilfsverbraucher 68 über einen Gleichrichter 70 der Niederspannungs-Schaltanlage 63 mit der Normalbetriebsschiene 65 bzw. der Notstrombetriebsschiene 67 elektrisch verbunden sind. Weiter umfasst die Phasenschieberanlage eine zweite Batterieanlage 71 mit einer Batterie 72, welche mit den Gleichspannungs-Hilfsverbrauchern 68 und mit den Wechselspannungs-Hilfsverbrauchern 69 über einen Wechselrichter 73 der zweiten Batterieanlage 71 elektrisch verbunden ist. Das Schalten der Niederspannungs-Schaltanlage 63 erfolgt mittels Schaltern 74, 75, 76, 77, 78, 79 der Niederspannungs-Schaltanlage 63.

Zu der **Fig. 2** wird ergänzend auf die Beschreibung der **Fig. 1** verwiesen.

Die Merkmale aus den **Fig. 1** und **2** können miteinander kombiniert werden. Insbesondere kann die Phasenschieberanlage 10 die Niederspannungs-Schaltanlage 63 umfassen.

**Bezugszeichenliste**

| | | | |
|---|---|---|---|
| 10 | Phasenschieberanlage | 47 | Dieselaggregat |
| 11 | rotierender Phasenschieber | 48 | Dieselmotor |
| 12 | Synchronmaschine | 49 | Generator |
| 13 | Schalter | 50 | Blindleistungskompensationsanlage |
| 14 | erste Schalteinrichtung | 51 | Kondensator |
| 15 | Schalteranlage | 52 | Hilfsverbraucher |
| 16 | Mittelspannungsschaltanlage | 53 | Niederspannungs-Schaltanlage |
| 17 | Anfahreinrichtung | 54 | Niederspannungstransformator |
| 18 | Schalter | 55 | Notstrombetriebsschiene |
| 19 | Schalter | 56 | Schalter |
| 20 | zweite Schalteinrichtung | 57 | Schalter |
| 21 | Maschinentransformator | 58 | Schalter |
| 22 | Eigenbedarfstransformator | 59 | Gleichspannungshilfsverbraucher |
| 23 | Mittelspannungsschiene | 60 | Wechselspannungshilfsverbraucher |
| 24 | Schalter | 61 | Gleichrichter |
| 25 | Schalter | 62 | zweite Batterieanlage |
| 26 | Schalter | 63 | Niederspannungs-Schaltanlage |
| 27 | Schalter | 64 | Niederspannungstransformator |
| 28 | Schalter | 65 | Normalbetriebsschiene |
| 29 | Schalter | 66 | Hilfsverbraucher |
| 30 | Frequenzumrichter | 67 | Notstrombetriebsschiene |
| 31 | Gleichrichter | 68 | Gleichspannungshilfsverbraucher |
| 32 | Wechselrichter | 69 | Wechselspannungsverbraucher |
| 33 | Anfahrtransformator | 70 | Gleichrichter |
| 34 | Erregersystem | 71 | zweite Batterieanlage |
| 35 | Erregereinrichtung | 72 | Batterie |
| 36 | Erregerwicklung | 73 | Wechselrichter |
| 37 | Thyristorstellglied | 74 | Schalter |
| 38 | Thyristor | 75 | Schalter |
| 39 | Thyristor | 76 | Schalter |
| 40 | Schalter | 77 | Schalter |
| 41 | Erregertransformator | 78 | Schalter |
| 42 | Wirklinie | 79 | Schalter |
| 43 | erste Batterieanlage | | |
| 44 | Batterie | | |
| 45 | Gleichrichter | | |
| 46 | Schalter | | |

## Patentansprüche

1. Phasenschieberanlage (10), umfassend einen rotierenden Phasenschieber (11), welcher eine, insbesondere mit einer Schwungmasse mechanisch gekoppelte, Synchronmaschine (12) umfasst, und eine Mehrzahl von elektrischen Hilfsverbrauchern (52, 66),
**dadurch gekennzeichnet,**
**dass** die Phasenschieberanlage bei einem Netzausfall zu einem kontrollierten Abfahren des rotierenden Phasenschiebers von einem Normalbetrieb der Phasenschieberanlage in einen Notstrombetrieb der Phasenschieberanlage umschaltbar ist, in welchem eine Rotationsenergie des rotierenden Phasenschiebers mittels der in dem Notstrombetrieb in einem Generatorbetrieb betriebenen Synchronmaschine in eine elektrische Energie umwandelbar ist, welche zumindest zeitweise zur Versorgung zumindest eines, vorzugsweise notstromberechtigten, Teils der Mehrzahl von, insbesondere als Niederspannungs-Hilfsverbraucher ausgebildeten, Hilfsverbrauchern während des Abfahrens des rotierenden Phasenschiebers vorgesehen ist.

2. Phasenschieberanlage nach Anspruch 1,
**dadurch gekennzeichnet,**
**dass** die Phasenschieberanlage (10) eine Erkennungseinrichtung zur Erkennung des Netzausfalls umfasst.

3. Phasenschieberanlage nach Anspruch 1 oder 2,
**dadurch gekennzeichnet,**
**dass** die Phasenschieberanlage (10) eine mit der Synchronmaschine (12) elektrisch verbundene Anfahreinrichtung (17) umfasst, derart, dass zumindest der Teil der Mehrzahl von Hilfsverbrauchern (52, 66) in dem Notstrombetrieb über die Anfahreinrichtung mit der elektrischen Energie versorgbar ist.

4. Phasenschieberanlage nach einem der vorangehenden Ansprüche,
**dadurch gekennzeichnet,**
**dass** die Phasenschieberanlage (10) ein Erregersystem (34) zur Ausbildung einer die Synchronmaschine (12) erregenden Erregerleistung umfasst, wobei die elektrische Energie in dem Notstrombetrieb ferner zur Ausbildung der Erregerleistung vorgesehen ist.

5. Phasenschieberanlage nach Anspruch 4,
**dadurch gekennzeichnet,**
**dass** die Phasenschieberanlage (10) eine erste Batterieanlage (43) zur unterbrechungsfreien Energieversorgung des Erregersystems (34) von einem Zeitpunkt des Netzausfalls bis zu einem Zeitpunkt eines Beginns des Notstrombetriebs umfasst.

6. Phasenschieberanlage nach einem der vorangehenden Ansprüche,
**dadurch gekennzeichnet,**
**dass** die Phasenschieberanlage (10) eine, insbesondere mit Kondensatoren (51) ausgebildete und/oder durch eine abkoppelbare Synchronmaschine ausgeführte, Blindleistungskompensationsanlage (50) zur Kompensation eines Blindleistungsbedarfs zumindest des Teils der Mehrzahl von Hilfsverbrauchern (52, 66) umfasst.

7. Phasenschieberanlage nach einem der vorangehenden Ansprüche,
**dadurch gekennzeichnet,**
**dass** die Phasenschieberanlage (10) eine Schaltanlage, insbesondere Niederspannungs-Schaltanlage (53, 63), umfasst, mit welcher die Mehrzahl von Hilfsverbrauchern (52, 66) elektrisch verbunden ist, wobei die Schaltanlage eine Normalbetriebsschiene (65), mit welcher die Mehrzahl von Hilfsverbrauchern elektrisch verbunden ist, und eine Notstrombetriebsschiene (55, 67), mit welcher ausschließlich der notstromberechtigte Teil der Mehrzahl von Hilfsverbrauchern elektrisch verbunden ist, umfasst, wobei die Schaltanlage bei dem Umschalten der Phasenschieberanlage in den Notstrombetrieb schaltbar ist, derart, dass nach dem Schalten der Schaltanlage ausschließlich der notstromberechtigte Teil der Mehrzahl von Hilfsverbrauchern mit der elektrischen Energie versorgbar ist.

8. Phasenschieberanlage nach einem der vorangehenden Ansprüche,
**dadurch gekennzeichnet,**
**dass** die Phasenschieberanlage (10) eine zweite Batterieanlage (62, 71) zur unterbrechungsfreien Energieversorgung zumindest des Teils der Mehrzahl von Hilfsverbrauchern (52, 66) von einem Zeitpunkt des Netzausfalls bis zu einem Zeitpunkt eines Beginns des Notstrombetriebs und/oder zur zumindest teilweisen Energieversorgung zumindest des Teils der Mehrzahl von Hilfsverbrauchern nach einem Zeitpunkt eines Erreichens eines Schwellenwerts einer Drehzahl des rotierenden Phasenschiebers (11), vorzugsweise von 5 Hz, und/oder zur zumindest teilweisen Energieversorgung zumindest des Teils der Mehrzahl von Hilfsverbrauchern nach dem Abfahren des rotierenden Phasenschiebers umfasst.

9. Phasenschieberanlage nach einem der vorangehenden Ansprüche,
**dadurch gekennzeichnet,**
**dass** die Phasenschieberanlage (10) ein Dieselaggregat (47) für einen Wiederanfahrbetrieb der Phasenschieberanlage nach einer Netzwiederkehr umfasst.

10. Verfahren zum Betrieb einer Phasenschieberanlage (10), wobei die Phasenschieberanlage einen rotierenden Phasenschieber (11), welcher eine, insbesondere mit einer Schwungmasse mechanisch gekoppelte, Synchronmaschine (12) umfasst, und eine Mehrzahl von elektrischen Hilfsverbrauchern (52, 66) umfasst,
**dadurch gekennzeichnet,**
**dass** die Phasenschieberanlage bei einem Netzausfall zu einem kontrollierten Abfahren des rotierenden Phasenschiebers von einem Normalbetrieb der Phasenschieberanlage in einen Notstrombetrieb der Phasenschieberanlage umgeschaltet wird, in welchem eine Rotationsenergie des rotierenden Phasenschiebers mittels der in dem Notstrombetrieb in einem Generatorbetrieb betriebenen Synchronmaschine in eine elektrische Energie umgewandelt wird, welche zumindest zeitweise zur Versorgung zumindest eines, vorzugsweise notstromberechtigten, Teils der Mehrzahl von, insbesondere als Niederspannungs-Hilfsverbraucher ausgebildeten, Hilfsverbrauchern während des Abfahrens des rotierenden Phasenschiebers verwendet wird.

11. Verfahren nach Anspruch 10,
**dadurch gekennzeichnet,**
**dass** bei dem Umschalten der Phasenschieberanlage (10) in den Notstrombetrieb eine erste Schalteinrichtung (14) der Phasenschieberanlage, über welche die Synchronmaschine (12) mit einer mit einer Mittelspannungsschaltanlage (16) der Phasenschieberanlage elektrisch verbundenen Anfahreinrichtung (17) der Phasenschieberanlage elektrisch verbunden ist, geschaltet wird, derart, dass die elektrische Energie über die Anfahreinrichtung in die Mittelspannungsschaltanlage eingespeist wird, wobei zumindest der Teil der Mehrzahl von Hilfsverbrauchern (52, 66) über die Mittelspannungsschaltanlage mit der elektrischen Energie versorgt wird.

12. Verfahren nach Anspruch 11,
**dadurch gekennzeichnet,**
**dass** bei dem Umschalten der Phasenschieberanlage (10) in den Notstrombetrieb eine zweite Schalteinrichtung (20) der Phasenschieberanlage, über welche die Synchronmaschine (12) mit einem Maschinentransformator (21) der Phasenschieberanlage und/oder mit einem mit der Mittelspannungsschaltanlage (16) elektrisch verbundenen Eigenbedarfstransformator (22) der Phasenschieberanlage elektrisch verbunden ist, geschaltet wird, derart, dass ein elektrischer Energiefluss über den Maschinentransformator und/oder den Eigenbedarfstransformator unterbrochen wird.

13. Verfahren nach Anspruch 11 oder 12,
**dadurch gekennzeichnet,**
**dass** zumindest der über einen Niederspannungstransformator (54, 64) der Phasenschieberanlage (10) und eine Niederspannungs-Schaltanlage (53, 63) der Phasenschieberanlage mit der Mittelspannungsschaltanlage (16) elektrisch verbundene Teil der Mehrzahl von als Niederspannungs-Hilfsverbraucher ausgebildeten Hilfsverbrauchern (52, 66) mit der elektrischen Energie versorgt wird.

14. Verfahren nach einem der Ansprüche 11 bis 13,
**dadurch gekennzeichnet,**
**dass** ferner ein mit der Mittelspannungsanlage (16) elektrisch verbundenes Erregersystem (34) der Phasenschieberanlage (10) zur Ausbildung einer die Synchronmaschine (12) erregenden Erregerleistung mit der elektrischen Energie versorgt wird.

15. Verfahren nach Anspruch 14,
**dadurch gekennzeichnet,**
**dass** die mittels des Erregersystems (34) ausgebildete, die Synchronmaschine (12) erregende Erregerleistung mit einer bei dem Abfahren des rotierenden Phasenschiebers (11) abnehmenden Drehzahl des rotierenden Phasenschiebers erhöht wird, derart, dass eine Klemmenspannung der Synchronmaschine konstant gehalten wird.

16. Verfahren nach einem der Ansprüche 10 bis 15,
**dadurch gekennzeichnet,**
**dass** die Mehrzahl von Hilfsverbrauchern (52, 66) ein Schmiermittelsystem zur Versorgung von Lagern des rotierenden Phasenschiebers (11) mit einem Schmiermittel, insbesondere Schmieröl, umfasst, wobei das Schmiermittelsystem, vorzugsweise von einem Zeitpunkt eines Beginns des Notstrombetriebs zumindest bis zu einem Zeitpunkt eines Erreichens eines ersten Schwellenwerts einer Drehzahl des rotierenden Phasenschiebers, vorzugsweise von 5 Hz, mit der elektrischen Energie versorgt wird.

17. Verfahren nach einem der Ansprüche 10 bis 16,
**dadurch gekennzeichnet,**
**dass** die Mehrzahl von Hilfsverbrauchern (52, 66) ein Vakuumsystem zum Absaugen von Luft aus einem die Schwungmasse des rotierenden Phasenschiebers aufnehmenden, luftdicht versiegelten Gehäuse des rotierenden Phasenschiebers (11) umfasst, wobei das Vakuumsystem, vorzugsweise von einem Zeitpunkt eines Beginns des Notstrombetriebs zumindest bis zu einem Zeitpunkt eines Erreichens eines zweiten Schwellenwerts einer Drehzahl des rotierenden Phasenschiebers, vorzugsweise von 33,5 Hz, mit der elektrischen Energie versorgt wird.

18. Verfahren nach einem der Ansprüche 10 bis 17,
**dadurch gekennzeichnet,**
**dass** die Mehrzahl von Hilfsverbrauchern (52, 66) ein Kühlluftsystem zur Kühlung des rotierenden Phasenschiebers (11) mit Luft umfasst, wobei das Kühlluftsystem, vorzugsweise von einem Zeitpunkt eines Beginns des Notstrombetriebs zumindest bis zu einem Zeitpunkt eines Erreichens eines dritten Schwellenwerts einer Drehzahl des rotierenden Phasenschiebers, vorzugsweise von 5 Hz, mit der elektrischen Energie versorgt wird.

19. Verfahren nach einem der Ansprüche 10 bis 18,
**dadurch gekennzeichnet,**
**dass** die Mehrzahl von Hilfsverbrauchern (52, 66) ein Kühlmittelsystem zur Kühlung von einem Schmiermittel und/oder einer Luft mit einem Kühlmittel, insbesondere Wasser, umfasst, wobei das Kühlmittelsystem, vorzugsweise von einem Zeitpunkt eines Beginns des Notstrombetriebs zumindest bis zu einem Zeitpunkt eines Erreichens eines vierten Schwellenwerts einer Drehzahl des rotierenden Phasenschiebers (11), vorzugsweise von 5 Hz, mit der elektrischen Energie versorgt wird.

20. Verfahren nach einem der Ansprüche 10 bis 19,
**dadurch gekennzeichnet,**
**dass** die Mehrzahl von Hilfsverbrauchern (52, 66) ein Leittechniksystem umfasst, wobei das Leittechniksystem, vorzugsweise von einem Zeitpunkt eines Beginns des Notstrombetriebs zumindest bis zu einem Zeitpunkt eines Erreichens eines fünften Schwellenwerts einer Drehzahl des rotierenden Phasenschiebers (11), vorzugsweise von 5 Hz, mit der elektrischen Energie versorgt wird.
